# EUROPEAN PATENT SPECIFICATION

(11) **EP 0 543 292 B1**
(45) Date of publication and mention of the grant of the patent: **08.02.1995**
(21) Application number: 92119476.7
(22) Date of filing: 13.11.1992
(51) Int. Cl.: C08L 83/04, C08K 3/00

(54) **A flame retardant elastomeric composition**
Flammhemmende elastomere Zusammensetzung
Composition élastomère à combustion retardée

(30) Priority: 18.11.1991 US 793876
(43) Date of publication of application: 26.05.1993
(73) Proprietor: WACKER-CHEMIE GMBH, D-81737 München (DE)
(72) Inventor: Toporcer, Louis H., Toledo, OH 43615 (US); Dibling, Mark R., Toledo, OH 43613 (US)

(56) References cited:
- EP-A- 0 483 776
- FR-A- 2 396 788
- US-A- 3 734 881
- US-A- 4 102 852
- US-A- 4 216 140

## Description

The present invention relates to a room temperature curable organopolysiloxane composition, particularly to a room temperature organopolysiloxane composition which cures to an elastomer having flame retardant properties and more particularly to a self-leveling organopolysiloxane composition which cures to a flame retardant elastomer.

### Background of the Invention

Organopolysiloxanes which have flame retardant properties are known in the art. For example U.S. Pat. 3,514,424 to Noble et al., describes a flame retardant composition containing a silicone elastomer free of silicon bonded hydrogen, a filler and a small amount of a platinum-containing material.

U.S. Pat. 3,652,488 to Harder describes a flame resistant silicone elastomer containing (a) a polydiorganosiloxane gum, (b) a reinforcing filler, (c) an organic peroxide, (d) platinum and (e) carbon black, in which the flame resistant composition is free of silicon bonded hydrogen atoms.

U.S. Pat. 3,734 881 to Shingledecker describes a one-component self-extinguishing silicone elastomer which comprises (a) a hydroxyl endblocked polydimethylsiloxane, (b) a silica or titanium dioxide filler, (c) a silane of the formula RSiY₃, where R is a vinyl radical and Y is a radical selected from an acetoxy radical and a ketoxime radical, (d) carbon black and (e) a platinum compound, in which the composition is free of tin, mercury, bismuth, copper and sulfur.

U.S. Pat. 3,840,492 to Smith et al., discloses a flame retardant organopolysiloxane composition comprising (a) an organopolysiloxane containing silicon-bonded hydroxyl and/or alkoxy groups and a silicon-bonded organic radical selected from aryl, alkaryl, aralkyl and halogenated derivatives thereof, (b) an organotriacyloxysilane or an organosilicate or liquid partial hydrolysis products of said organosilicate and (c) a platinum containing material.

US-A 4,216,140 describes a self-extinguishing room temperature vulcanizable polyorganosiloxane composition in which an elastomer is formed by crosslinking one or a mixture of silanol-terminated polydiorganosiloxanes containing phenyl groups bonded with the silicon atoms with an aminoxy group containing organosilicon compound, characterized in that finely divided powder of aluminum hydroxide is incorporated therein for imparting a self-extinguishing property thereto.

FR 2396788 describes flame-resistant silicone rubber vulcanisable at ambient temperature which contains an organopolysiloxane, platinum with carbon black and a triazole, a hardening catalyst and a crosslinking agent.

Neither US-A 4,216,140 nor FR 2396788 describe a composition which dos not burn. Both compositions burn for a short time which can be too long in cases of emergency.

U.S. Pat. 3,936,476 to Itoh et al., describes flame retardant compositions containing (a) an organopolysiloxane containing Si-bonded vinyl groups, (b) methylhydrogenpolysiloxanes having at least two SiH groups per molecule, (c) finely divided silica filler, (d) finely divided manganese carbonate and (e) platinum or a platinum compound.

U.S. Pat. 4,102,852 to DeLaTorre et al., describes a self extinguishing room temperature curable silicone rubber composition containing (a) a silanol endblocked diorganopoysiloxane polymer, (b) zinc oxide, (c) filler, (d) an alkoxy functional crosslinking agent, (e) carbon black, (f) platinum and (g) a titanium chelate catalyst.

U.S. Pat. 4,310,444 to Hamada et al., describes a flame retardant silicone rubber containing (a) an organopolysiloxane, (b) a finely pulverized silica filler, (c) platinum compound, (d) fatty acid compound and (e) an organic peroxide.

### Object of the Invention

It is an object of the present invention to provide an elastomer having improved flame retardant properties. Another object of the present invention is to provide an elastomer which has flame retardant properties that are better than of elastomers containing platinum and/or carbon black. Still another object of the present invention is to provide organopolysiloxane compositions which can be cured in the presence of tin catalysts to form elastomers having flame retardant properties. A further object of the present invention is to provide an organopolysiloxane composition which cures at room temperature to form an elastomer having improved flame retardant properties. A still further object of the present invention is to provide a self-leveling organopolysiloxane composition which cures to a flame retardant elastomer.

The foregoing objects and others which will become apparent from the following description are accomplished in accordance with this invention, by providing a room temperature curable composition which when exposed to atmospheric moisture forms a flame retardant silicone elastomer comprising (a) an organopolysiloxane represented by the general formula

HO(SiR₂O)ₙH

where R is selected from the group consisting of a monovalent hydrocarbon radical and a substituted monovalent hydrocarbon radical having from 1 to 18 carbon atoms, and n is an integer having a value of at least 5, (b) a crosslinking agent selected from the group consisting of (i) silanes of the formula RₘSiZ₄₋ₘ, (ii) partial hydrolyzates thereof having from 2 to 10 silicon atoms per molecule and (iii) mixtures thereof, where R is the same as above, Z is a functional group selected from the group consisting of hydrocarbonoxy groups, amine groups, aminoxy groups, oxime groups and mixtures thereof, and m is a number of from 0 to less than 2, (c) a condensation catalyst which is a carboxylic acid salt of a metal in which the metal is selected from the group consisting of lead, tin, nickel, cobalt, iron, cadmium, chromium, zinc and manganese, (d) platinum metal or compound thereof in an amount of from 0.2 to 500 parts per million, calculated as metallic platinum and based on the weight of organopolysiloxane (a), (e) carbon black in an amount of from 1 to 20 parts by weight, (f) alumina trihydrate having a surface area of not below 2.0 m²/g and an average particle size from 0.5 to 50 micrometers, in an amount of more than 100 to 150 parts by weight in which all parts by weight are based on 100 parts by weight of organopolysiloxane (a) and optionally (g) a reinforcing filler, having a surface area of at least 50 m²/g and/or a non reinforcing filler, having a surface area of less than 50 m²/g.

Although this is generally not shown in the above formula, the siloxane chain of the aforementioned diorganopolysiloxanes may contain siloxane units in addition to the diorganosiloxane units (SiR₂O). Examples of such other siloxane units, which are generally present only as impurities, are those corresponding to the formulas RSiO_{3/2}, R₃SiO_{1/2} and SiO_{4/2}, where R is the same as above. It is however, preferred that such other siloxane units be present in an amount less than 5 mol percent. Still other siloxane units, for example, those of the formula -SiR₂R'SiR₂O-, where R is the same as above and R' is a divalent hydrocarbon radical, for example, a phenyl radical, may be present in larger amounts.

It is preferred that the hydrocarbon radicals represented by R contain from 1 to 18 carbon atoms.

Examples of hydrocarbon radicals represented by R are alkyl radicals, for example, the methyl and ethyl radical, as well as propyl, butyl, hexyl and octadecyl radicals; alkenyl radicals such as the vinyl, allyl, ethylallyl and butadienyl radicals; aryl radicals such as the phenyl radical; alkaryl radicals such as the tolyl radicals; and aralkyl radicals such as the beta-phenylethyl radical.

Examples of substituted monovalent hydrocarbon radicals represented by R are halogenated hydrocarbon radicals, such as the 3,3,3-trifluoropropyl radical, chlorophenyl and bromotolyl radicals; and cyanoalkyl radicals, such as the beta-cyanoethyl radical.

Because of their availability, it is preferred that at least 80 percent of the R radicals be methyl radicals.

The organopolysiloxanes preferably contain from about 1.8 to 2.2 organic groups per silicon atom.

The organopolysiloxanes employed in this invention can be homopolymers i.e., only one species of siloxane unit is present, or a copolymer containing two or more different species of siloxane units. Also, the organopolysiloxanes can be a mixture of homopolymers and/or copolymers.

The organopolysiloxanes may range in viscosity from about 5 mPa·s at 25°C. and more preferably from about 500 to about 100,000 mPa·s at 25°C. Thus, the organopolysiloxanes can range from low viscosity liquids to non-flowing benzene soluble gums. Of course, the particular physical state of the polymer will vary depending upon the end use of the composition.

Among the cross-linking agents (b) which may be employed in the compositions of this invention, examples of functional groups represented by Z are hydrocarbonoxy and substituted hydrocarbonoxy groups (-OR'), hydrocarbonoxy-hydrocarbonoxy groups (-OR''-OR'), where R'' is a divalent hydrocarbon radical having from 2 to 8 carbon atoms, aminoxy groups (-ONR'₂), amino groups (-NR'''₂) and oxime groups (-ON=CR'''₂), in which R' represents the same or different monovalent or substituted monovalent hydrocarbon radicals and R''' represents hydrogen or R'.

The hydrocarbon radicals represented by R' and R''' have from 1 to 18 carbon atoms and more preferably from 1 to 10 carbon atoms.

The examples of hydrocarbon radicals represented by R also apply to the hydrocarbon radicals represented by R' and R'''.

Examples of hydrocarbonoxy radicals are alkoxy radicals having from 1 to 18 carbon atoms and more preferably from 1 to 10 carbon atoms are methoxy, ethoxy, n-propoxy, isopropoxy, butoxy, hexyloxy, heptyloxy, octyloxy, tetradecyloxy and octadecyloxy radicals as well as hydrocarbonoxy radicals such as vinyloxy, allyloxy, ethylallyloxy, isopropenyloxy, butadienyloxy and phenoxy groups.

An example of a hydrocarbonoxy-hydrocarbonoxy radical is the methoxyethyleneoxy group.

Examples of aminoxy groups are dimethylaminoxy, diethylaminoxy, dipropylaminoxy, dibutylaminoxy, dioctylaminoxy, diphenylaminoxy, ethylmethylaminoxy and methylphenylaminoxy groups.

Examples of amine compounds are n-butylamino, sec-butylamino and cyclohexylamino groups.

Examples of oxime compounds are acetaldoxime, acetophenonoxime, acetonoxime, benzophenonoxime, 2-butanonoxime, diisopropylketoxime and chlorocyclohexanonoxime groups.

Examples of cross-linking agents (b) are tetraethoxysilane, methyltrimethoxysilane, methyltriethoxysilane, methyltripropoxysilane, methyltributoxysilane, ethyltrimethoxysilane, ethyltriethoxysilane, ethyltri-n-propoxysilane, propyltriethoxysilane, propyltri-n-propoxysilane, butyltrimethoxysilane, butyltriethoxysilane, isobutyltrimethoxysilane, isobutyltriethoxysilane, n-hexyl trimethoxysilane, cyclohexyltrimethoxysilane, benzyltrimethoxysilane, phenyltrimethoxysilane, phenyltriethoxysilane, octyltrimethoxysilane, octyltriethoxysilane, lauryltrimethoxysilane, 2-ethylhexyltrimethoxysilane, decyltrimethoxysilane, dodecyltrimethoxysilane, tetradecyltriethoxysilane, hexadecyltriethoxysilane, octadecyltriethoxysilane as well as mixtures of the above silanes and mixtures or the above silanes with silanes such as diethyldiethoxysilane, dimethyldipropoxysilane, di-isopropyldiisopropoxysilane, dibutyldimethoxysilanes, di-isobutyldimethoxysilane, octylmethyldi-isopropoxysilane and partial hydrolyzates thereof.

Examples of suitable amine cross-linking agents (b) are methyl tris-(sec-butylamine)silane, methyl tris-(n-butylamino)silane, methyl tris-(n-heptylamino)silane, methyl tris-(cyclohexylamino)silane, phenyl tris-(3,5,5-trimethylcyclohexylamino)silane, tetra-(n-butylamino)silane and partial hydrolyzates thereof.

Examples of suitable aminoxy cross-linking agents (b) are methyl tris-(diethylaminoxy)silane, ethyl tris-(dimethylaminoxy)silane, methyl tris-(dipropylaminoxy)silane, methyl tris-(dibutylaminoxy)silane, ethyl tris-(diethylaminoxy)silane, ethyl tris-(dipropylaminoxy)silane, ethyl tris-(dibutylaminoxy)silane and partial hydrolyzates thereof.

Examples of oxime compounds which may be employed as crosslinking agents (b) are methyl tris(acetophenoximo)silane, methyl tris-(acetoximo)silane, methyl tris-(benzophenoximo)silane, ethyl tris-(2-butanoximo)silane, methyl tris-(3-methyl-2-butanoximo)silane, propyl tris-(2-nonanoximo)silane, butyl tris-(5-methyl-2-hexanoximo)silane, tetrakis(acetoximo)silane and partial hydrolyzates thereof.

The crosslinking agents (b) may be employed as a single species or mixtures of the various cross-linking agents may be employed.

Other cross-linking agents (b) which may be employed are partial hydrolyzates of the silanes (i) having from 2 to 10 silicon atoms. Examples of partial hydrolyzates of the silanes are hexamethoxydisiloxane, dimethyltetraethoxydisiloxane, dimethyldiphenylhexylethoxytetrasiloxane and alkoxy containing organopolysiloxanes having up to 10 silicon atoms.

The partial hydrolyzates (ii) may be employed alone or in admixture with silanes (i).

The silanes, partial hydrolyzates or mixtures thereof may be employed in an amount of from about 0.2 to about 15 parts by weight and more preferably from about 1 to 10 parts by weight per 100 parts by weight of the organopolysiloxane (a).

Among the Catalysts (c) which may be employed in the compositions to accelerate curing the specific metal ion which is preferred is tin. The carboxylic acids from which the salts of these metals are derived can be monocarboxylic acids or dicarboxylic acids and the metallic salts can either be soluble or insoluble in the organopolysiloxane. Preferably, the salts employed are soluble in the organopolysiloxane since this facilitates the uniform dispersion of the salt in the reaction mixture.

Illustrative of metal salts which can be employed in accordance with the present invention are, for example, zinc naphthenate, lead naphthenate, cobalt naphthenate, iron 2-ethylhexoate, cobalt octoate, zinc octoate, lead octoate, chromium octoate and tin octoate. Metal salts operative in the practice of the present invention include those in which the metallic ion contains a hydrocarbon substituent, such as, for example, carbomethoxyphenyl tin trisuberate, isobutyl tin triceroate, cyclohexenyl lead triacotinate, xenyl lead trisalicylate, dimethyl tin dibutyrate, dibutyl tin diacetate, dibutyl tin dilaurate, divinyl tin diacetate, dibutyl tin dibenzoate, dibutyl tin dioctoate, dibutyl tin maleate, dibutyl tin adipate, diisoamyl tin bistrichlorobenzoate, diphenyl lead diformate, dibutyl tin dilactate, dicyclopentyl lead bis-monochloroacetate, dibenzyl lead di-2-pentanoate, diallyl lead di-2-hexanoate, triethyl tin tartrate, tributyl tin acetate, triphenyl tin acetate, tricyclohexyl tin acrylate, tritolyl tin terephthalate, tri-n-propyl lead acetate, tristearyl lead succinate, trinaphthyl lead p-methylbenzoate, tris-phenyl lead cyclohexenyl acetate, triphenyl lead ethylmalonate, etc.

When the silane crosslinking agent (b) has the formula RₘSi(Z)₄₋ₘ where Z is an alkoxy function group (OR') or (OR''OR'), where R' and R'' are the same as above or partial hydrolyzates thereof, it is preferred that a titanium ester or partial hydrolyzates thereof be employed.

Titanium compounds which may be employed in the compositions of this invention are titanium esters having the formula Ti(OR')₄, where R' is the same as above. Specific examples of titanium esters which may be employed are titanium esters of monohydric alcohols, such as tetramethyltitanate, tetraethyltitanate, tetraisopropyltitanate, tetrabutyltitanate, tetra-(2-ethylhexyl)titanate, tetrahexyltitanate and tetraoctyltitanate. Partial hydrolyzates of any of the above titanates as well as polymeric titanates having the formula -Ti-O-Ti- may be employed.

The amount of catalyst which may be employed in the present invention is a function of the increased rate of curing desired so that any amount of catalyst up to the maximum effective amount for increasing the cure rate can be employed. In general, no particular benefit is derived from employing more than about 5 percent by weight of catalyst based on the weight of the organopolysiloxane (a). Preferably, the amount of catalyst ranges from about 0.01 percent to 2.0 percent by weight, based on the weight of the organopolysiloxane (a).

The compositions of this invention also contain platinum and/or platinum compounds or complexes. The platinum and/or platinum compounds may be dispersed on carriers, such as silicon dioxide, aluminum oxide or activated carbon. Furthermore, it is possible to use compounds or complexs of these metals, such as PtCl₄, H₂PtCl₆.6H₂O, Na₂PtCl₄.4H₂O, platinum-olefin complexes, platinum-alcohol complexes, platinum-alcoholate complexes, platinum-ether complexes, platinum-aldehyde complexes, platinum-ketone complexes, ammonium platinum complexes, platinum-vinylsiloxane complexes, especially platinum-divinyltetramethyldisiloxane complexes with or without any detectible, inorganically bonded halogen and trimethylenedipyridine platinum dichloride.

The compositions of this invention contain carbon black (d) such as acetylene carbon black, lamp black, fine thermal carbon black, furnace carbon black, or channel carbon black.

The amount of carbon black which may be present in the composition may range preferably from 1.5 parts and more preferably from 5 to 10 parts by weight based on 100 parts by weight of the organopolysiloxane (a).

The carbon black can have a surface area of at least 10 m²/g and a particle size of from 0.05 to 0.20 micron.

The composition also contains alumina trihydrate Al₂O₃·3H₂O.

Preferably the specific surface area of the alumina trihydrate is at least 3 m²/g and more preferably has a surface area greater than 6 m²/g. A specific surface area of from 8 to 20 m²/g is especially preferred, although lower surface areas will yield acceptable results.

The alumina trihydrate preferably has a maximum particle size less than about 4 microns and more preferably less than about 2 microns.

Treated alumina trihydrate; i.e., alumina trihydrate which has been pretreated with cyclic polysiloxanes, such as octamethylcyclotetrasiloxane or treated with silazanes or a combination of silazanes and cyclic polysiloxanes and other treating agents such as metallic stearates which are well known in the art, may be employed in the compositions of this invention.

In addition to the organopolysiloxane (a), cross-linking agent (b), catalyst (c), platinum metal, compound or complex (d), carbon black (e), alumina trihydrate (f), the compositions may optionally contain fillers (g). Fillers which may be employed are reinforcing fillers. Examples of reinforcing fillers, that is fillers having a surface area of at least 50 m²/g, are pyrogenically produced silicon dioxide, silicon dioxide aerogels, that is to say, silicic acid hydrogels dehydrated so as to maintain the structure, and precipitated silicon dioxide. Examples of non-reinforcing fillers, that is fillers having a surface area of less than 50 m²/g, are calcium carbonate, quartz powder, diatomaceous earth, titanium dioxide, zirconium silicate, aluminum silicate, zinc oxide, plaster of paris, so-called "molecular sieves", and asbestine, that is to say a magnesium-calcium silicate which resembles talc. All these fillers, but especially the reinforcing fillers, can have organosilyl groups on their surface if they have been pretreated, for example, with trimethylhalogenosilanes, as described in, for example U.S. Pat. 2,610,167, or if they have been manufactured, for example, by reaction of aqueous silica sols with organohalogenosilanes, or have been rendered hydrophobic in some other way.

Also, the fillers may be treated with other silicon compounds, such as hexamethyldisilazane and vinyltrialkoxysilanes to impart organosilyl groups to the surfaces of the treated fillers.

Preferably, the fillers are used in amounts of from 0 to 200 percent by weight, especially front 5 to 150 percent by weight, based on the total weight of organopolysiloxane (a). Non-reinforcing fillers are generally used in amounts of at least 20 percent by weight, based on the total weight of the organopolysiloxane (a), whereas reinforcing fillers are generally used in amounts of from 1 to 50 percent by weight, based on the total weight of the organopolysiloxane (a). It is, however, possible to use larger amounts of reinforcing fillers provided that the workability of the compositions does not suffer as a result. The amount of reinforcing fillers may exceed 50 percent by weight, if for example, the fillers have been obtained from the reaction of aqueous silica sols with organohalogenosilanes.

The composition of this invention may also contain fibrous fillers, such as glass fibers having an average length up to about 0.5 mm, and/or asbestos fibers.

Other additives which may be employed in the compositions of this invention are pigments, soluble dyes, scents, organopolysiloxane resins, including those comprising (CH₃)₃SiO_{1/2} and SiO_{4/2} units, purely organic resins such as powders of homopolymers or copolymers or acrylonitrile, polyvinylchloride, corrosion inhibitors, oxidation inhibitors, heat stabilizers, solvents, additional agents which serve to improve the adhesion of the compositions to the surfaces on which they are applied, such as, for example, gamma-glycidoxypropyltriethoxysilane, plasticizers such as trimethylsiloxy terminated organopolysiloxanes which are fluid at room temperature and the like.

The order of addition of the ingredients to form the compositions is not critical and they can be prepared under anhydrous conditions in any conventional manner known in the art. The method of addition as well as the sequence of addition is not critical; however, it is preferred that the crosslinking agent be added as one of the last ingredients to the composition.

Conventional methods for forming homogenous mixtures may be employed, such as combining the organopolysiloxane (a) with the carbon black (e) alumina trihydrate (f) and optionally filler (g) and then adding the other ingredients to the mixture. The platinum compounds can conveniently be added by mixing with a diluent such as organopolysiloxane fluids to assist in dispersion because the amount used is very small. After the ingredients are mixed, the composition is stored under anhydrous conditions until it is desired to cure the composition, then the composition is exposed to moisture, such as atmospheric moisture, and cured to a flame retardant elastomer. If desired the composition may be heated to an elevated temperature to accelerate curing of the composition; Temperatures of from 30 to 100°C., and more preferably of from 40 to 75°C. may be used to cure the compositions to form elastomers having flame retardant properties.

Another embodiment of this invention is the preparation of a self-leveling organopolysiloxane composition which cures to a flame retardant elastomer. The self-leveling composition comprises (a) an organopolysiloxane having at least two silicon bonded hydroxyl groups per molecule, preferably, terminal hydroxyl groups and a viscosity of from 5 to 10,000, preferably about 1,000 to 6,000 mPa·s at 25°C. The resultant composition has the ability to self-level and when exposed to atmospheric moisture cures to a flame retardant elastomer.

The ingredients employed in the self-leveling organopolysiloxane composition are the same ingredients which are used in the preparation of an organopolysiloxane which cures to a flame retardant elastomer.

It was unexpectedly found that the room temperature curable compositions of the present invention formed elastomers which are flame retardant. Alumina trihydrate without platinum and carbon black does not provide an elastomer having flame retardant properties. Alumina trihydrate and carbon black does not provide an elastomer having satisfactory flame retardant properties. Alumina trihydrate and platinum likewise does not provide an organopolysiloxane elastomer having desirable flame retardant properties. The combination of alumina trihydrate, carbon black and platinum provides an organopolysiloxane elastomer having excellent flame retardant properties. Likewise, the combination of alumina trihydrate, carbon black, platinum and tin provides an organopolysiloxane elastomer having excellent flame retardant properties.

These flame retardant elastomeric compositions are useful as insulation for electrical equipment, as encapsulants, and as sealants where flame retardancy is desired or necessary. The self-leveling compositions are especially useful for filling crevices where a flame retardant elastomer is desired.

In the following examples, all parts are by weight unless otherwise specified. All temperatures are at 25°C. unless otherwise stated.

### Preparation of Platinum Compounds

(A) Preparation of platinum-vinylsiloxane complex.
   About 20 parts of sodium bicarbonate were added to a mixture containing 10 parts of H₂PtCl₆.6H₂O, 20 parts of 1,3-divinyl-1,1,3,3-tetramethyldisiloxane and 50 parts of ethanol. The mixture was heated for 30 minutes to boiling under reflux while stirring, then allowed to stand for 15 hours and subsequently filtered. The volatile constituents were distilled off from the filtrate at about 16 hPa (abs). About 17 parts of a liquid were obtained as residue and the liquid was dissolved in benzene. The solution was filtered and the benzene was distilled off from the filtrate. The residue was blended with dimethylpolysiloxane having dimethylvinylsiloxane units as terminal units and having a viscosity of 1400 mPa·s at 25°C. as diluent in an amount such that the mixture contains 1 percent by weight of platinum, calculated as the element.
(B) Preparation of dicyclopentadiene-platinum dichloride
   About 0.2 g of dicyclopentadiene-platinum dichloride is dissolved in 20 ml of methylene chloride. The solution is mixed with 100 g of a dimethylpolysiloxane having terminal vinyldimethylsiloxy units and a viscosity of 1000 mPa·s at 23°C.. The mixture is stirred at room temperature and at 1 bar until the methylene chloride evaporates. The resultant mixture contains 1.2 percent of platinum, calculated as elemental platinum.
(C) Preparation of ammonium platinum complex
   An aminofunctional silicone composition is prepared by heating a mixture containing about 226.4 parts of octamethylcyclotetrasiloxane, 22.4 parts of β-(aminoethyl)-gamma-aminopropyltrimethoxysilane and 0.29 parts of potassium hydroxide to a temperature of 145°C.for three hours. After cooling the liquid product to room temperature, 0.29 parts of acetic acid are added to neutralize the potassium hydroxide. The product is filtered and a liquid product having a viscosity of about 40 mPa·s at 25°C. is recovered.
   About 28.8 parts of the aminofunctional silicon composition prepared above are added to a reactor under an atmosphere of nitrogen. About 100 parts of isopropanol, 1.04 parts of chloroplatinic acid hexahydrate, and 45 parts of toluene are added to the reactor and the reaction mixture is stirred for 30 minutes at 27°C. The resultant transparent orange colored product contains 0.16 weight percent of platinum.

### Example 1

About 100 parts of hydroxyl terminated polydimethylsiloxane having a viscosity of about 80,000 mPa·s is mixed under anhydrous conditions with 3.4 parts of polyethylene glycol, 0.5 parts of platinum compound (A) above, 120.7 parts of alumina trihydrate having a particle size of 3.5 microns (available as Microl 632 SP from Solem), 13.4 parts of carbon black (Shawinigan Black), 69 parts of a trimethylsiloxy endblocked polydimethylsiloxane having a viscosity of 100 mPa·s at 25°C., 23.4 parts of methyl tris-(methylethylketoximo)-silane and 13.4 parts of fumed silica. After mixing the resultant mixture for 30 minutes under anhydrous conditions, 0.34 parts of dibutyltin diacetate is added as a catalyst and mixed for an additional 10 minutes under anhydrous condition. The resultant mixture is allowed to cure for 7 days at room temperature in the presence of atmospheric moisture.

The flame retardant properties are determined in accordance with the procedure described by Underwriters Laboratories in method UL-94 for the flammability of plastic materials. In determining the flame retardant properties, the cured sample of silicone elastomer is placed in a vertical position 9.5 mm above the top of a burner tube. The flame of the burner is adjusted so that a blue flame 19 mm in height is produced. The burner is located centrally under the lower end of the test sample and the flame allowed to remain in contact with the sample for 10 seconds. The burner is removed from the sample and the time the sample continues to flame is recorded. Immediately after the flaming ceases, the burner is placed under the sample for another 10 second period. Again, the burner is removed and the time the sample flames and the total time the sample flames and glows is recorded. The time after removal from the flame until the flame and glow of the sample goes out is recorded in seconds. Each time is an average of five samples. The results are shown in the Table.

### Example 2

The procedure of Example 1 is repeated except that 23.4 parts of methyl tris-(cyclohexylamino)silane are substituted for methyl tris-(methylethylketoximo)silane and the dibutyltin diacetate is omitted. The flame retardant properties are determined in accorrdance with the procedure of Example 1. The results are shown in the Table.

### Example 3

The procedure of Example 1 is repeated, except that 23.4 parts of methyltriethoxysilane are substituted for methyl tris-(methylethylketoximo)silane and 12 parts of tetrabutyltitanate are substituted for dibutyltin diacetate. The flame retardant properties are determined in accordance with the procedure of Example 1. The results are shown in the Table.

### Example 4

The procedure of Example 1 is repeated, except that 0.5 parts of platinum complex (B) are substituted for 0.5 parts of platinum complex (A). The flame retardant properties are determined in accordance with the procedure of Example 1. The results are shown in the Table.

### Example 5

The procedure of Example 4 is repeated except that 0.25 parts of platinum compound (B) are substituted for 0.5 parts of platinum compound (B). The flame retardant properties are determined in accordance with the procedure of Example 1. The results are shown in the Table.

### Example 6

The procedure of Example 1 is repeated, except that 6 parts of carbon black (Shawinigan Black) are substituted for 13.4 parts of carbon black. The flame retardant properties are determined in accordance with the procedure of Example 1. The results are shown in the Table.

### Example 7

The procedure of Example 1 is repeated except that 2 parts of the ammonium platinum complex (C) above, are substituted for the platinum compound (A) above. The flame retardant properties are determined in accordance with the procedure of Example 1. The results are shown in the Table.

### Example 8

The procedure of Example 1 is repeated except that 13.4 parts of carbon black (identified as LONZA Graphite Powder KS 6, available from LONZA LTD.) are substituted for 13.4 parts of carbon black (Shwaninigan Black). The flame retardant properties are determined in accordance with the procedure of Example 1. The results are shown in the Table.

### Example 9

The procedure of Example 1 is repeated except that the hydroxyl terminated polydimethylsiloxane has a viscosity of about 6,000 mPa·s at 25°C. Also, 110 parts of alumina trihydrate are substituted for the 120.7 parts of alumina trihydrate. The 3.4 parts of polyethylene glycol and 13.4 parts of fumed silica are omitted. The flame retardant properties are determined in accordance with the procedure of Example 1. The results are shown in the Table.

### Example 10

The procedure of Example 9 is repeated except that 2 parts of the ammonium platinum complex (C) above, are substituted for the platinum compound (A) above. The flame retardant properties are determined in accordance with the procedure of Example 1. The results are shown in the Table.

### Example 11

The procedure of Example 1 is repeated except that 0.5 parts of chloroplatinic acid H₂PtCl₆.6H₂O is substituted for platinum compound (A). The resultant composition exhibited flame retardant properties.

### Comparison Example V₁

The procedure of Example 1 is repeated except that the carbon black is omitted. The flame retardant properties are determined in accordance with the procedure of Example 1. The results are shown in the Table.

### Comparison Example V₂

The procedure of Example 1 is repeated except that the alumina trihydrate is omitted. The flame retardant properties are determined in accordance with the procedure of Example 1. The results are shown in the Table.

### Comparison Example V₃

The procedure of Example 1 is repeated except that the platinum compound (A) is omitted. The flame retardant properties are determined in accordance with the procedure of Example 1. The results are shown in the Table.

### Comparison Example V₄

The procedure of Example 1 is repeated except that the platinum compound (A) and the carbon black are omitted. The flame retardant properties are determined in accordance with the procedure of Example 1. The results are shown in the Table.

### Comparison Example V₅

The procedure of Example 1 is repeated except that 120.7 parts of aluminum oxide particles are substituted for the 120.7 parts of alumina trihydrate. The flame retardant properties are determined in accordance with the procedure of Example 1. The results are shown in the Table.

### Comparison Example V₆

The procedure of Example 1 is repeated except that 23.4 parts of ethyltriacetoxysilane are substituted for 23.4 parts of methyl tris-(methylethylketoximo)silane. The flame retardant properties are determined in accordance with the procedure of Example 1. The results are shown in the Table.

**TABLE**

| Example No. | First Application Flame, (sec.) | Second Application | |
|---|---|---|---|
| | | Flame, (sec.) | Flame/Glow (sec.) |
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0 |
| 7 | 0 | 0 | 0 |
| 8 | 0 | 0 | 0 |
| 9 | 0 | 0 | 0 |
| 10 | 0 | 0 | 0 |

| Comparison Example No. | | | |
|---|---|---|---|
| V₁ | 4.4 | 1.4 | 3.6 |
| V₂ | >60 | --- | --- |
| V₃ | 1.2 | 2 | 3.2 |
| V₄ | 20.8 | 21.8 | 36.6 |
| V₅ | >60 | --- | --- |
| V₆ | 4 | 33 | >60 |

## Claims

1. A room temperature curable composition which when exposed to atmospheric moisture forms a flame retardant silicone elastomer comprising (a) an organopolysiloxane represented by the general formula
HO(SiR₂O)ₙH
where R is selected from the group consisting of a monovalent hydrocarbon radical and a substituted monovalent hydrocarbon radical having from 1 to 18 carbon atoms, and n is an integer having a value of at least 5, (b) a crosslinking agent selected from the group consisting of (i) silanes of the formula RₘSiZ₄₋ₘ, (ii) partial hydrolyzates thereof having from 2 to 10 silicon atoms per molecule and (iii) mixtures thereof, where R is the same as above, Z is a functional group selected from the group consisting of hydrocarbonoxy groups, amine groups, aminoxy groups, oxime groups and mixtures thereof, and m is a number of from 0 to less than 2, (c) a condensation catalyst which is a carboxylic acid salt of a metal in which the metal is selected from the group consisting of lead, tin, nickel, cobalt, iron, cadmium, chromium, zinc and manganese, (d) platinum metal or compound thereof in an amount of from 0.2 to 500 parts per million, calculated as metallic platinum and based on the weight of organopolysiloxane (a), (e) carbon black in an amount of from 1 to 20 parts by weight, (f) alumina trihydrate having a surface area of not below 2.0 m²/g and an average particle size from 0.5 to 50 micrometers, in an amount of more than 100 to 150 parts by weight in which all parts by weight are based on 100 parts by weight of organopolysiloxane (a) and optionally (g) a reinforcing filler, having a surface area of at least 50 m²/g and/or a non reinforcing filler, having a surface area of less than 50 m²/g.

2. The composition of claim 1, wherein the crosslinking agent contains hydrocarbonoxy functional groups and the catalyst is a titanate ester.

3. The composition of claims 1 or 2 which is self-leveling, wherein (a) the organopolysiloxane contains at least two silicon bonded hydroxyl groups per molecule and has a viscosity of from 5 to 10,000 mPa·s at 25 °C.

## Patentansprüche

1. Bei Raumtemperatur härtbare Zusammensetzung, die, wenn sie atmosphärischer Feuchtigkeit ausgesetzt wird, ein flammhemmendes Siliconelastomer bildet, umfassend (a) ein Organopolysiloxan der allgemeinen Formel
HO(SiR₂O)ₙH
worin R aus der aus einem einwertigen Kohlenwasserstoffrest und einem substituierten einwertigen Kohlenwasserstoffrest mit 1 bis 18 Kohlenstoffatomenbestehenden Gruppe gewählt ist und n eine ganze Zahl mit einem Wert von mindestens 5 bedeutet, (b) ein Vernetzungsmittel, welches aus der aus (i) Silanen der Formel RₘSiZ₄₋ₘ, (ii) teilweisen Hydrolysaten davon mit 2 bis 10 Siliziumatomen pro Molekül und (iii) Mischungen davon bestehenden Gruppe gewählt ist, worin R die obige Bedeutung hat, Z eine funktionelle Gruppe ist, welche aus der aus Kohlenwasserstoffoxygruppen, Amingruppen, Aminoxygruppen, Oximgruppen und Mischungen davon bestehenden Gruppe gewählt ist, und m eine Zahl von 0 bis weniger als 2 ist, (c) einen Kondensationskatalysator, bei dem es sich um ein Carbonsäuresalz eines Metalls handelt, wobei das Metall aus der aus Blei, Zinn, Nickel, Cobalt, Eisen, Cadmium, Chrom, Zink und Mangan bestehenden Gruppe gewählt ist, (d) ein Platinmetall oder eine Verbindung davon in einer Menge von 0,2 bis 500 Teilen pro Million, berechnet als metallisches Platin und bezogen auf das Gewicht des Organopolysiloxans (a), (e) Ruß in einer Menge von 1 bis 20 Gewichtstellen, (f) Aluminiumoxidtrihydrat mit einer Oberfläche von nicht weniger als 2,0 m²/g und einer durchschnittlichen Teilchengröße von 0.5 bis 50 »m in einer Menge von mehr als 100 bis 150 Gewichtsteilen, wobei sämtliche Gewichtsteile auf 100 Gewichtsteile Organopolysiloxan (a) bezogen sind, und wahlweise (g) einen verstärkenden Füllstoff mit einer Oberfläche von mindestens 50 m²/g und/oder einen nichtverstärkenden Füllstoff mit einer Oberfläche von weniger als 50 m²/g.

2. Zusammensetzung nach Anspruch 1, wobei das Vernetzungsmittel funktionelle Kohlenwasserstoffoxygruppen enthält und der Katalysator ein Titanatester ist.

3. Zusammensetzung nach den Ansprüchen 1 oder 2, welche selbstnivellierend ist, wobei (a) das Organopolysiloxan mindestens zwei Silizium-gebundene Hydroxylgruppen pro Molekül enthält und eine Viskosität von 5 bis 10 000 mPa·s bei 25°C besitzt.

## Revendications

1. Composition durcissable à la température ambiante qui, quand elle est exposée à l'humidité atmosphérique, forme un élastomère de silicone à combustion retardée comprenant (a) un organopolysiloxane représenté par la formule générale
HO(SiR₂O)ₙH
dans laquelle R est choisi dans le groupe constitué d'un radical hydrocarboné monovalent et un radical hydrocarboné monovalent substitué ayant de 1 à 18 atomes de carbone, et n est un nombre entier ayant une valeur d'au moins 5, (b) un agent de réticulation choisi dans le groupe constitué (i) des silanes de formule RₘSiZ₄₋ₘ, (ii) des hydrolysats partiels de ceux-ci ayant de 2 à 10 atomes de silicium par molécule et (iii) leurs mélanges, où R est tel que défini ci-dessus, Z est un groupe fonctionnel choisi dans le groupe constitué des groupes hydrocarbonoxy, des groupes amine, des groupes aminoxy, des groupes oxime et leurs mélanges, et m est un nombre valant de 0 à moins de 2, (c) un catalyseur de condensation qui est un sel d'acide carboxylique d'un métal dans lequel le métal est choisi dans le groupe constitué du plomb, de l'étain, du nickel, du cobalt, du fer, du cadnium, du chrome, du zinc et du manganèse, (d) du platine métallique ou un composé de celui-ci à raison de 0,2 à 500 parties par million, calculé en platine métallique et par rapport au poids de l'organopolysiloxane (a), (e) du noir de carbone à raison de 1 à 20 parties en poids, (f) de l'alumine trihydrate ayant une surface spécifique pas inférieure à 2,0 m²/g et une granulométrie moyenne de 0,5 à 50 micromètres, à raison de plus de 100 à 150 parties en poids dans laquelle toutes les parties en poids sont par rapport à 100 parties en poids d'organopolysiloxane (a) et, éventuellement, (g) d'une charge de renforcement, ayant une surface spécifique d'au moins 50 m²/g et/ou une charge non renforçante, ayant une surface spécifique inférieure à 50 m²/g.

2. Composition selon la revendication 1, dans laquelle l'agent de réticulation contient des groupes hydrocarbonoxy fonctionnels et le catalyseur est un ester titanate.

3. Composition selon la revendication 1 ou 2 qui est auto-nivelante, dans laquelle (a) l'organopolysiloxane contient au moins 2 groupes hydroxyle liés au silicium par molécule et possède une viscosité de 5 à 10 000 mPa.s à 25°C.
